(19)

Europäisches
Patentamt
European
Patent Office
Office européen
des brevets

(11) **EP 4 207 529 A1**

(12) **EUROPEAN PATENT APPLICATION**
published in accordance with Art. 153(4) EPC

(43) Date of publication:
**05.07.2023 Bulletin 2023/27**

(21) Application number: **20958416.8**

(22) Date of filing: **29.10.2020**

(51) International Patent Classification (IPC):
*H02J 3/06* *(2006.01)*      *H02J 3/28* *(2006.01)*

(52) Cooperative Patent Classification (CPC):
Y02E 40/30; Y02E 40/40

(86) International application number:
**PCT/CN2020/124649**

(87) International publication number:
**WO 2022/082835 (28.04.2022 Gazette 2022/17)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **23.10.2020 CN 202011147149**

(71) Applicant: **Zhuzhou CRRC Times Electric Co., Ltd.
Zhuzhou, Hunan 412001 (CN)**

(72) Inventors:
• **XU, Shaolong**
**Zhuzhou, Hunan 412001 (CN)**
• **RAO, Peinan**
**Zhuzhou, Hunan 412001 (CN)**
• **CHEN, Jielian**
**Zhuzhou, Hunan 412001 (CN)**
• **ZHANG, Min**
**Zhuzhou, Hunan 412001 (CN)**
• **WANG, Xiong**
**Zhuzhou, Hunan 412001 (CN)**

• **WENG, Xingfang**
**Zhuzhou, Hunan 412001 (CN)**
• **YIN, Weiheng**
**Zhuzhou, Hunan 412001 (CN)**
• **CHEN, Guangzan**
**Zhuzhou, Hunan 412001 (CN)**
• **LI, Hongbo**
**Zhuzhou, Hunan 412001 (CN)**
• **HU, Ping**
**Zhuzhou, Hunan 412001 (CN)**
• **CAI, Yufeng**
**Zhuzhou, Hunan 412001 (CN)**
• **TAO, Hongliang**
**Zhuzhou, Hunan 412001 (CN)**
• **WU, Xuefeng**
**Zhuzhou, Hunan 412001 (CN)**

(74) Representative: **Herrmann, Uwe
Lorenz Seidler Gossel
Rechtsanwälte Patentanwälte
Partnerschaft mbB
Widenmayerstraße 23
80538 München (DE)**

(54) **TRACTION POWER SUPPLY SYSTEM FOR RAIL TRANSIT, CONTROL METHOD THEREFOR, AND RELATED COMPONENTS**

(57) A traction power supply system for rail transit, a control method therefor, and related components. The traction power supply system for rail transit comprises a high-voltage AC power supply bus, multiple bidirectional converters, a DC power supply bus used to supply power to a train, and multiple station equipment sets. One end of each of the bidirectional converters is connected to the high-voltage AC power supply bus, and the other end thereof is connected to the DC power supply bus. Each of the station equipment sets is connected to the high-voltage AC power supply bus. The present application uses the bidirectional converters to connect the DC power supply bus and the AC power supply bus, so as to perform flexible power distribution with respect to the magnitude and direction of power output on the DC power supply bus and the AC power supply bus, thereby achieving active control to reduce possible network voltage fluctuations. In addition, voltage conversion, braking feedback, harmonic control, and reactive power compensation are achieved to improve the energy recovery efficiency of regenerative braking and the efficiency of traction power supply, thereby enabling the entire power supply and distribution network to operate in a green, controllable, safe, highly efficient and intelligent manner.

**(Cont. next page)**

EP 4 207 529 A1

**Figure 1**

**Description**

The present application claims priority to Chinese Patent Application No. 202011147149.4, titled "RAIL TRANSIT TRACTION POWER SUPPLY SYSTEM, CONTROL METHOD AND SYSTEM THEREOF AND RELATED COMPONENTS", filed on October 23, 2010 with the China National Intellectual Property Administration, which is incorporated herein by reference in its entirety.

**FIELD**

The present disclosure relates to the field of traction power supply for rail transport, and in particular to a traction power supply system for rail transport, a method for controlling the traction power supply system for rail transport, and related components.

**BACKGROUND**

Currently, urban rail transport at home and abroad is generally supplied with power of DC1500V/750V from an alternating current power grid of 35kV or 10kV via a rectifier diode unit. A traction substation typically includes two 12-pulse rectifiers, form a 24-pulse rectifier unit, for supplying power to a direct current traction grid. For the purpose of energy conservation and emission reduction, energy generated from railway brake is fed back to the alternating current power grid via an energy feedback device arranged on a rail line, for utilization.

There is a large proportion of low harmonics, which results in low power factor, in a traction power supply system due to uncontrollable and varying outputted voltage and the like, and thus a device for harmonic control and reactive power compensation is essential to the existing traction power supply system. Furthermore, there is large fluctuations in the direct current voltage and a large proportion of energy loss through rail lines due to droop characteristics of diodes.

Therefore, it is desirable for those skilled in the art to solve the technical problems.

**SUMMARY**

In view of this, a traction power supply system for rail transport, a method for controlling the traction power supply system for rail transport, and related components are provided according to the present disclosure. The traction power supply system includes a bidirectional converter rather than a rectifier diode unit, so as to avoid fluctuations in the direct current voltage resulted from droop characteristics of diodes, thereby improving efficiency of traction power supply and further improving quality of electric energy of a power supply grid. The technical solution is described in detail as follows.

A traction power supply system for rail transport includes a high-voltage alternating current power supply bus, multiple bidirectional converters, a direct current power supply bus configured to supply power to a rail vehicle, and multiple station facilities. For each of the multiple bidirectional converters, one end of the bidirectional converter is connected to the high-voltage alternating current power supply bus, and the other end of the bidirectional converter is connected to the direct current power supply bus. The multiple station facilities each are connected to the high-voltage alternating current power supply bus.

Preferably, the traction power supply system for rail transport further includes a renewable power generation system connected to the high-voltage alternating current power supply bus.

Preferably, the traction power supply system for rail transport further includes an energy storage device connected to the direct current power supply bus.

Preferably, the number of the high-voltage alternating current power supply bus is more than one. Power is supplied to the more than one high-voltage alternating current power supply buses a by respective high-voltage alternating current power supplies. Among the more than one high-voltage alternating current power supply buses, one is connected to another via a bus tie breaker.

Preferably, the traction power supply system for rail transport further includes an ECMS configured to output a control signal to the multiple bidirectional converters.

Preferably, the ECMS is configured to perform an optimal power flow calculation based on electrical state information of the multiple bidirectional converters to determine the control signal.

Preferably, the ECMS is configured to communicate with the multiple bidirectional converters via an optical fiber or a 4G communication module.

Preferably, the ECMS is connected to an ATS, and is further configured to determine the control signal based on vehicle operation information from the ATS.

According, a method for controlling a traction power supply system for rail transport is further provided according to the present disclosure. The method is applied to the traction power supply system for rail transport. The method includes: establishing an algorithm model for the traction power supply system for rail transport; acquiring electrical state information of the traction power supply system for rail transport; and performing an optimal power flow calculation based on the algorithm model and the electrical state information and outputting a control signal to the plurality of bidirectional converters.

Preferably, before the performing an optimal power flow calculation based on the algorithm model and the electrical state information and outputting a control signal to the plurality of bidirectional converters, the method further includes: acquiring vehicle operation information of the rail vehicle from the ATS, where the vehicle operation information comprises an operation speed and an operation power. The performing an optimal power flow calculation based on the algorithm model and the electrical state information and outputting a control signal to the plurality of bidirectional converters includes: acquiring a predicted position for the rail vehicle based on the vehicle operation information; and performing, based on the algorithm model, the electrical state information, the vehicle operation information and the predicted position for the rail vehicle, the optimal power flow calculation according to a principle of supplying power to the rail vehicle by a substation proximity to the rail vehicle, and outputting the control signal to the plurality of bidirectional converters to control the rail vehicle to operate following a predetermined energy-saving curve.

Preferably, the performing an optimal power flow calculation based on the algorithm model and the electrical state information and outputting a control signal to the plurality of bidirectional converters further includes: outputting a regulation signal to an energy storage device of the traction power supply system for rail transport.

Preferably, the performing an optimal power flow calculation based on the algorithm model and the electrical state information and outputting a control signal to the plurality of bidirectional converters further includes: outputting a regulation signal to the multiple station facilities.

Preferably, the performing an optimal power flow calculation based on the algorithm model and the electrical state information and outputting a control signal to the plurality of bidirectional converters further includes: outputting a regulation signal to a renewable power generation system of the traction power supply system for rail transport.

Preferably, the establishing an algorithm model for the traction power supply system for rail transport includes: equating each of the plurality of bidirectional converters with an equivalent internal resistor and an ideal voltage source that are connected in series; and equating the rail vehicle with a controlled current source, where a power of the controlled current source depends on vehicle operation information of the rail vehicle.

Preferably, the performing an optimal power flow calculation based on the algorithm model and the electrical state information and outputting a control signal to the plurality of bidirectional converters includes: performing a power flow calculation based on the algorithm model and the electrical state information, to determine a power flow state of the algorithm model; determining the control signal based on the power flow state and an optimization objective function; and outputting the control signal to the multiple bidirectional converters, to control the traction power supply system for rail transport to reach a target defined by the optimization objective function.

Preferably, the optimization objective function includes: at least one of an objective function for minimum active power, an objective function for minimum system loss, an objective function for minimum highest electricity demand, and an objective function for minimum cost.

Accordingly, a device for controlling a traction power supply system for rail transport is further provided according to the present disclosure. The device includes a memory and a processor. The memory is configured to store a computer program. The processor is configured to execute the computer program to perform the method for controlling a traction power supply system for rail transport.

Accordingly, a computer readable storage medium is further provided according to the present disclosure. The computer readable storage medium stores a computer program. The computer program, when executed by a processor, implements the method for controlling a traction power supply system for rail transport.

The traction power supply system for rail transport according to the present disclosure includes a high-voltage alternating current power supply bus, multiple bidirectional converters, a direct current power supply bus configured to power a rail vehicle, and multiple station facilities. For each of the multiple bidirectional converters, one end of the bidirectional converter is connected to the high-voltage direct current power supply bus, and the other end of the bidirectional converter is connected to the direct current power supply bus. The multiple station facilities each are connected to the high-voltage alternating current power supply bus. According to the present disclosure, the direct current power supply bus is connected to the alternating current power supply bus via the bidirectional converters, so that the amount of power and a direction in which the power is outputted from the direct current power supply bus and the alternating current power supply bus can be flexibly regulated, thereby proactively avoiding potential fluctuations in the direct current voltage. In addition, conversion of voltage, feedback of energy from brake, harmonic control, and reactive power compensation are all achieved, thereby improving utilization of energy generated by railway brake and efficiency of the traction power supply. Therefore, the entire power supply and distribution grid can operate greenly, controllably, safely, efficiently and intelligently.

BRIEF DESCRIPTION OF THE DRAWINGS

Figure 1 is a schematic structural diagram illustrating a traction power supply system for rail transport according to an embodiment of the present disclosure;

Figure 2 is a flowchart illustrating a method for controlling a traction power supply system for rail transport according to an embodiment of the present disclosure;

Figure 3 is a schematic diagram showing comparison between an operation curve in the conventional technology and an operation curve in an embodiment of the present disclosure;

Figure 4 is a flowchart illustrating a method for controlling a traction power supply system for rail transport according to an embodiment of the present disclosure;

Figure 5 is a schematic diagram illustrating an algorithm model of a traction power supply system for rail transport according to an embodiment of the present disclosure;

Figure 6 is a schematic diagram showing a curve illustrating a correspondence between an operation speed of a rail vehicle and a power supplied to the rail vehicle according to an embodiment of the present disclosure;

Figure 7 is a schematic diagram illustrating an operation mode of four-quadrant branches according to an embodiment of the present disclosure;

Figure 8 is a schematic diagram illustrating total active power consumption by the network according to an embodiment of the present disclosure; and

Figure 9 is a schematic diagram illustrating a total line loss according to an embodiment of the present disclosure.

DETAILED DESCRIPTION

Technical solutions of the present disclosure are clearly and completely described below in conjunction with the drawings of the present disclosure. Apparently, the embodiments described in the following are only some rather than all the embodiments of the present disclosure. Any other embodiments obtained by those skilled in the art based on the embodiments in the present disclosure without any creative effort fall within the protection scope of the present disclosure.

First Embodiment

There is a large proportion of low harmonics, which results in low power factor, in a traction power supply system due to uncontrollable and varying outputted voltage and the like, and thus a device for harmonic control and reactive power compensation is essential the existing traction power supply system. Furthermore, there is large fluctuations in the direct current voltage and a large proportion of line loss due to droop characteristics of diodes. In the present disclosure, the direct current power supply bus is connected to the alternating current power supply bus via the bidirectional converters, so that the amount of power and a direction in which the power is outputted from the direct current power supply bus and the alternating current power supply bus can be flexible, thereby proactively avoiding potential fluctuations in the direct current voltage. In addition, conversion of voltage, feedback of energy from brake, harmonic control, and reactive power compensation are all achieved, thereby improving utilization of energy generated by railway brake and efficiency of the traction power supply. Therefore, the entire power supply and distribution grid can operate greenly, controllably, safely, efficiently and intelligently.

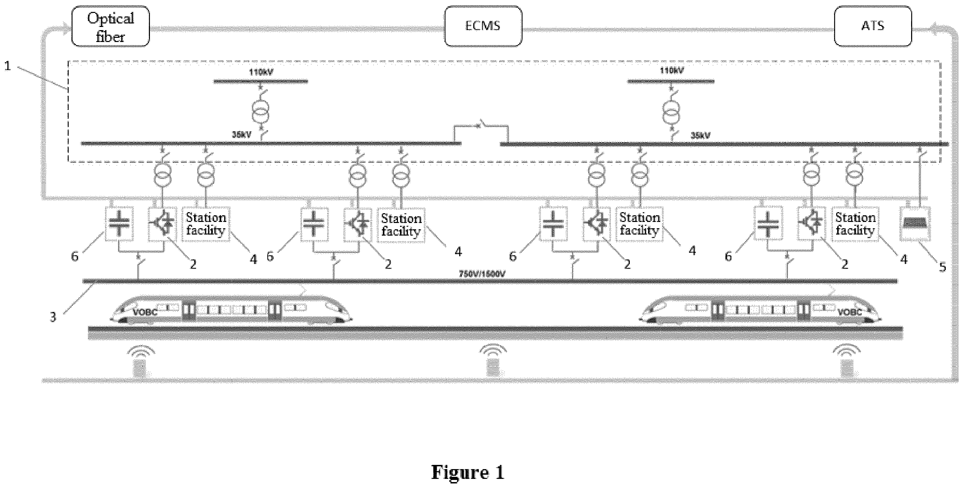

A traction power supply system for rail transport is provided according to this embodiment of the present disclosure. Referring to Figure 1, the system includes a high-voltage alternating current power supply bus 1, multiple bidirectional converters 2, a direct current power supply bus 3 configured to supply power to a rail vehicle, and multiple station facilities 4.

For each of the multiple bidirectional converters 2, one end of the bidirectional converter 2 is connected to the high-voltage direct current power supply bus 1, and the other end of the bidirectional converter 2 is connected to the direct current power supply bus 3.

Each of the multiple station facilities 4 is connected to the high-voltage alternating current power supply bus 1.

It should be understood that the bidirectional converters 2 connect the high-voltage alternating current power supply bus 1 to the direct current power supply bus 3, so that electric energy can flow from the high-voltage alternating current power supply bus 1 to the direct current power supply bus 3 and from the direct current power supply bus 3 to the high-voltage alternating current power supply bus 1 by controlling the bidirectional converters 2. The bidirectional converters 2 are controlled based on a PWM (Pulse Width Modulation) signal. A controllable device in the bidirectional converter 2 includes, but is not limited to an IGBT (Insulated Gate Bipolar Transistor), a thyristor, a MOS transistor (Metal Oxide Semiconductor, a field effect transistor), and the like. The bidirectional converter 2 in this embodiment serves as both the uncontrollable rectifier diode unit and the energy feedback device in the existing traction power supply system. Therefore, compared with the existing traction power supply system, the structure of the traction power supply system according to the present disclosure is simplified, includes fewer components and thus has a smaller volume. With the traction power supply system provided with the bidirectional converter 2, the outputted energy is controllable, fluctuations in the voltage is avoided, as well as redundancy and costs in design are significantly reduced compared with the existing traction power supply system including the uncontrollable rectifier diode unit, with which the outputted voltage is uncontrollable and varies with loads due to droop characteristics of diodes, and redundancy in design is large, resulting in a large volume, severe waste of resources and energy.

The high-voltage alternating current power supply bus 1 is usually implemented as an alternating current power grid of 35kV or 10kV, and the direct current power supply bus 3 usually has a voltage of DC1500V or DC750V.

Further, the high-voltage alternating current power supply buses 1 may be implemented as multiple high-voltage alternating current power supply buses powered by respective high-voltage alternating current power supplies. Among the multiple high-voltage alternating current power supply buses, one is connected to another via a bus tie breaker. For example, as shown in Figure 1, the high-voltage alternating current power supply bus 1 includes two 35kV alternating current buses that are connected via a bus tie breaker. The two 35kV alternating current buses are powered by two 110kV high-voltage alternating current power supplies via transformers, respectively. In addition, the high-voltage alternating-current power supply bus 1 may have other structure forms and powered by other alternating current power supply sources, depending on actual applications and not limited in this embodiment.

Each traction substation includes a traction power supply device and an auxiliary power supply device. Here, the bidirectional converter 2 serves as the traction power supply device, and the station facility 4 serves as the auxiliary power supply device. Each of the traction power supply device and the auxiliary power supply device are powered by the high-voltage alternating current power supply bus 1 via a 400V power transformer. The station facility 4 includes a station air conditioner, an elevator, a ventilation device, and the like. Power of the station facility 4 is regulatable, facilitating suppression of fluctuations in the voltage across the high-voltage alternating current power supply bus 1.

Further, the traction power supply system for rail transport may further include a renewable power generation system 5 connected to the high-voltage alternating current power supply bus 1.

Further, the traction power supply system for rail transport may further include an energy storage device 6 connected to the direct current power supply bus 3.

It should be understood that the renewable power generation system 5 and the energy storage device 6 are optional. The renewable power generation system 5, the energy storage device 6 and the station facility 4 may assist in regulating power of the traction power supply system, improving quality of electric energy, operation stability, and operation economy of the traction power supply system.

Further, the traction power supply system for rail transport further includes an ECMS (Energy control management system) configured to output a control signal to the bidirectional converters 2.

It should be understood that stable operation of the traction power supply system for rail transport relies on accurate control on various devices, especially the bidirectional converters 2. In this embodiment, the bidirectional converters 2 are controlled by the ECMS.

The ECMS is further configured to determine the control signal based on electrical state information of the bidirectional converters 2 by performing the optimal power flow. Here, for the optimal power flow calculation, an algorithm model is established based on the various devices and a power flow calculation is performed on the algorithm model aiming at reducing the line loss and power fed back to the high-voltage alternating current power supply bus 1, and finally the control signal is outputted.

It should be understood that, the ECMS has to acquire the electrical state information of the bidirectional converters 2 for the optimal power flow. The ECMS interacts with the bidirectional converters 2 via a communication link formed by an optical fiber or a 4G communication module. Alternatively, the ECMS acquires the electrical state information of the bidirectional converters 2 via a PSCADA (power supervisory control and data acquisition), or a communication link formed by other communication modules.

Further, the ECMS is connected to an ATS (automatic train supervision), and is further configured to determine the control signal based on vehicle operation information of the ATS. It should be understood that the vehicle operation information of the ATS implies energy exchange between the vehicle and the direct current power supply bus 3. The ECMS determines the control signal based on the vehicle operation information, further optimizing control on the traction power supply system for rail transport during travelling of the vehicle and reducing fluctuations in power of the traction power supply system resulted from change in power of the vehicle.

It should be understood that, in a case that the traction power supply system for rail transport is provided with the station facility 4, the renewable power generation system 5 and the energy storage device 6 and all of which operate at regulable power, the ECMS may further control the station facility 4, the renewable power generation system 5 and the energy storage device 6, thereby improving quality of electric energy, voltage stability, and economic benefits of the entire traction power supply system.

The traction power supply system for rail transport according to the present disclosure includes a high-voltage alternating current power supply bus, multiple bidirectional converters, a direct current power supply bus configured to supply power to a rail vehicle, and multiple station facilities. For each of the multiple bidirectional converters, one end of the bidirectional converter is connected to the high-voltage direct current power supply bus, and the other end of the bidirectional converter is connected to the direct current power supply bus. Each of the multiple station facilities is connected to the high-voltage alternating current power supply bus. In the present disclosure, the direct current power supply bus is connected to the alternating current power supply bus via the bidirectional converters, so that the amount of power and a direction in which the power is outputted from the direct current power supply bus and the alternating current power supply bus can be flexible, thereby proactively avoiding potential fluctuations in the direct current voltage. In addition, conversion of voltage, feedback of energy from brake, harmonic control, and reactive power compensation are all achieved, thereby improving utilization of energy generated by railway brake and efficiency of the traction power supply. Therefore, the entire power supply and distribution grid can operate greenly, controllably, safely, efficiently and intelligently.

Second Embodiment

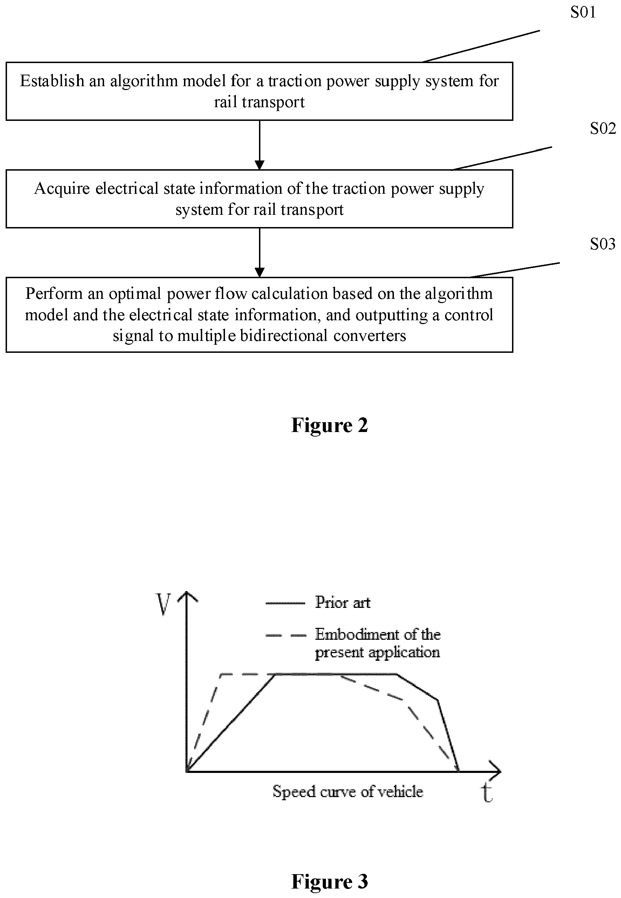

A method for controlling a traction power supply system for rail transport is further provided according to the embodiments of the present disclosure. The method is applied to the traction power supply system for rail transport according to the first embodiment. Referring to Figure 2, the method includes the following steps S01 to S03.

In step S01, an algorithm model for the traction power supply system for rail transport is established.

In step S02, electrical state information of the traction power supply system for rail transport is acquired.

In step S03, a control signal is determined based on the electrical state information by performing the optimal power flow calculation on the algorithm model and is transmitted to multiple bidirectional converters.

It should be understood that the method according to the second embodiment may be performed by the ECMS. The bidirectional converters are controlled based on the optimal power flow, so that the entire traction power supply system for rail transport can operate greenly, controllably, safely, efficiently and intelligently.

Before step S03 in which the control signal is determined based on the electrical state information by performing the optimal power flow calculation on the algorithm model and is transmitted to multiple bidirectional converters, the method further includes: acquiring vehicle operation information of the rail vehicle by an ATS. The vehicle operation information includes an operation speed and an operation power.

In this case, step S03 in which the control signal is determined based on the electrical state information by performing the optimal power flow calculation on the algorithm model and is transmitted to multiple bidirectional converters includes: acquiring a predicted vehicle position based on the vehicle operation information; and performing, based on the algorithm model, the electrical state information, the vehicle operation information and the predicted vehicle position, the optimal power flow following a principle of supplying power to a rail vehicle by a substation proximity to the rail vehicle, and outputting the control signal to the multiple bidirectional converters, so that the rail vehicle operates following a predetermined curve for energy conservation.

It should be understood that, the rail vehicle fails to communicate with the railway according to the conventional technology, resulting in failure in improving operation density of vehicles. In addition, the rail vehicle fails to operate following a curve for optimal energy conservation. In this embodiment, the traction power supply system for rail transport is controlled based on the vehicle operation information, and thus the bidirectional converters are controlled following a desired curve. For the purpose of energy conservation, the period of time that the vehicle spends on inertia operation is maximized subject to constraints on the maximum speed and the period of time for travelling between stations by following the desired curve, that is, a predetermined curve for energy conservation in this embodiment. As shown in Figure 3, the period of time that the vehicle spends on inertia operation according to the second embodiment is longer than that according to the conventional technology. In addition, the vehicle operates strictly following predetermined curve for energy conservation. The control is based on both the predetermined curve for energy conservation and real-time feedback of the vehicle operation information, thereby improving operation stability of the traction power supply system. The bidirectional converters are controlled by performing the optimal power flow calculation on a present algorithm model based on the electrical state information, the vehicle operation information, the predicted position of the vehicle and the predetermined curve, so that power adapts to the load. Therefore, the time spent on braking is reduced, and unnecessary consumption and waste of electric energy are successfully avoided. Further, redundancy in design is reduced, and thus cost is reduced.

Further, other power units in the traction power supply system may also participate in power regulation. For example, a regulation signal is outputted to the energy storage device of the traction power supply system for rail transport, a regulation signal is outputted to the station facility, and a regulation signal is outputted to the renewable power generation system of the traction power supply system for rail transport.

It should be understood that the traction substation is powered by the high-voltage alternating current power supply bus via a 400V power transformer and then supplies power to the station facility. The ECMS interacts with the station facility, and controls power of the station facility based on the regulation signal, thereby avoid fluctuations in voltage across the high-voltage alternating current power supply bus.

In this case, the energy storage device is configured to peak-shave and valley-fill electricity consumption, remaining the direct current voltage approximately constant, thereby facilitating energy conservation. The renewable power generation system such as a photovoltaic power generation system and a wind power generation system further facilitates energy conservation of the traction power supply system.

In the present disclosure, the bidirectional converters is controlled based on the control signal, so that the amount of power and a direction in which the power is outputted from the direct current power supply bus and the alternating current power supply bus is flexibly regulable, thereby proactively avoiding potential fluctuations in the direct current voltage. In addition, conversion of voltage, feedback of energy from brake, harmonic control, and reactive power compensation are all achieved, thereby improving utilization of energy generated by railway brake and efficiency of the traction power supply. Therefore, the entire power supply and distribution grid can operate greenly, controllably, safely, efficiently and intelligently.

Third Embodiment

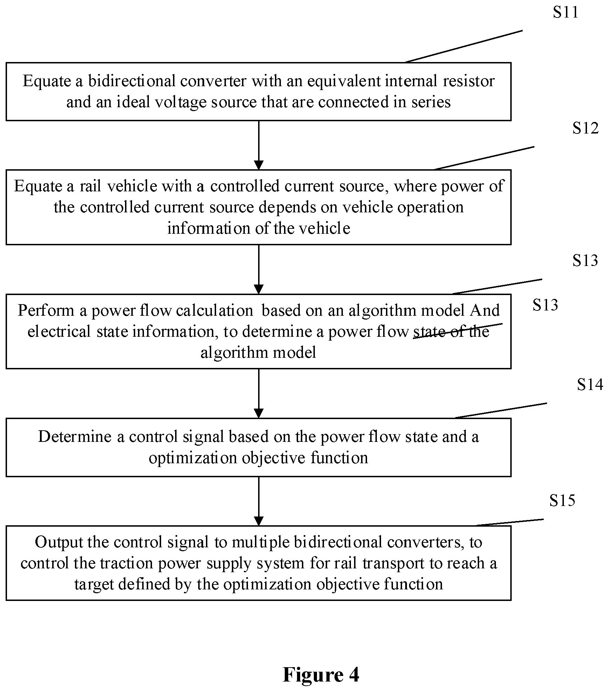

A method for controlling a traction power supply system for rail transport is provided according to the third embodiment of the present disclosure. Compared with the second embodiment, the technical solution is further described and optimized in the third embodiment. As shown in Figure 4, the method includes the following steps S11 to S15.

In step S11, a bidirectional converter is equated with an equivalent internal resistor and an ideal voltage source that are in series.

In step S12, a rail vehicle is equated with a controlled current source. Power of the controlled current source depends on vehicle operation information of the vehicle.

In step S13, a power flow calculation is performed on an algorithm model based on electrical state information, to determine a power flow state of the present algorithm model.

In step S14, a control signal is determined based on the power flow state and a system optimization objective function.

In step S15, the control signal is outputted to multiple bidirectional converters, to control the traction power supply system for rail transport to reach a target defined by the system optimization objective function.

The optimization objective function includes: at least one of an objective function for minimum active power, an objective function for minimum system loss, an objective function for minimum highest electricity demand, and an objective function for minimum cost.

It should be understood that the control in this embodiment also refers to as optimal power flow control. The optimal power flow, proposed by French scholar Carpentier in the 1960s, is a complex nonlinear programming problem. Some controllable variables are adapted to constraints of the system based on known load distribution and structural parameters of a power system, so that the power system can stably operate while an optimal predetermined objective is achieved. In the field of rail transport, the optimal power flow control on the traction power supply system may be realized by modifying operation states of a distributed power supply, an energy storage device, an adjustable load and a bidirectional converter.

For the optimal power flow control, a model is established, a present power flow state is determined based on present information, constraints on stable operation is taken into consideration, an objective function is determined and the optimal power flow calculation is performed according this embodiment.

First, an algorithm model for the traction power supply system for rail transport is established.

The traction power supply system here includes a bidirectional converter, a high-voltage alternating current power supply bus and a direct current power supply bus that are connected to the bidirectional converter. The influence of an upper layer power supply system on power supply and distribution is not considered here.

The model is established according to Thevenin's equivalent circuit. The bidirectional converter is equated with an equivalent internal resistor and an ideal voltage source that are connected in series. A voltage of the ideal voltage source depends on an operation state of a rectifier branch of the bidirectional converter. The equivalent internal resistance

# EP 4 207 529 A1

depends on parameters and operation states of a 24-pulse rectifier and the rectifier branch of the bidirectional converter. A model of an energy feedback branch of the bidirectional converter is similar. A direction for a diode in the energy feedback branch is opposite to a direction for the diode in the rectifier branch, indicating that a direction in which energy flows in an energy feedback mode is opposite to a direction in which energy flows in the rectifier mode. In addition, the bidirectional converter cannot operate in the rectifier mode and the energy feedback mode at the same time.

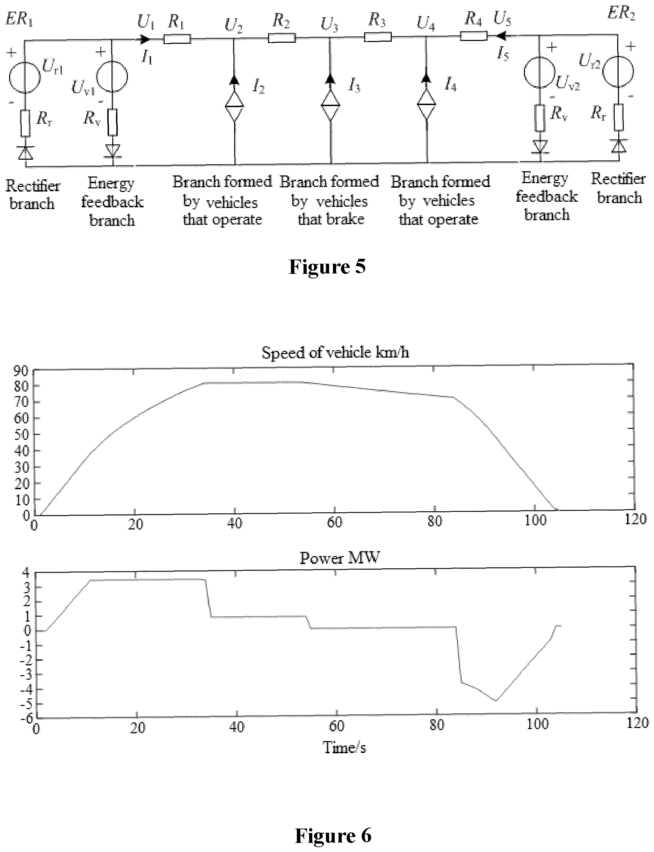

The bidirectional converter supplies power to the direct current power supply bus in a unilateral power supply manner or a bilateral power supply manner, and the bilateral power supply is a mainstream power supply manner. In the bilateral power supply manner, the entire direct current power supply system forms a large direct current power supply network. An equivalent model of the direct current power supply network supplying power to the rail vehicle is a huge and complex time-varying network. Modeling and solution for the time-varying network are complex. In order to study energy exchange between the rail vehicle and the power supply network, one feeding section in the power supply system is selected for research so as to simplify the formed mathematical model. An equivalent model of the simplified traction network is as shown in Figure 5. The rail vehicle is equivalent to a controlled current source. Electric power exchanging between the rail vehicle and the traction network is calculated based on a vehicle load model.

A vehicle load is a load with the largest peak power in the traction power supply system for rail transport, and its load characteristics directly affect the power flow. A mathematical model of traction braking characteristics of the vehicle is derived from speed regulation characteristics of an asynchronous motor. Energy data of the vehicle is acquired by traction calculation, and is substituted into the above model of the simplified traction network.

The asynchronous traction motor is controlled, during traction of the vehicle, in a constant torque mode, a constant power mode or a constant voltage constant slip mode. The asynchronous traction motor is also controlled during braking of the vehicle, in one of the three modes. However, different from the traction, the vehicle brakes at a constant deceleration in a full speed range due to air brake that serves as a supplement to a brake force. Therefore, the time spent on braking is shorter than the time spent on traction, and an allowable power overload coefficient under the braking is larger than that under the traction. In addition to traction and braking, the vehicle slows down due to resistance and the motor consumes no power during inertia operation. In a case that the train runs at a constant speed, a traction force is equal to resistance. It can be seen that the power data of the vehicle varies with operating conditions. For example, as shown in Figure 6, the vehicle operation information is acquired based on the operation state of the vehicle, and then an equivalent model of the vehicle is determined.

After the algorithm model is established, the power flow calculation is performed based on the present electrical state information, to determine the present power flow state. The power flow calculation involves iteration such as picard iteration and a Thomas algorithm, to solve a nodal admittance equation of the algorithm model. The present power flow state in the algorithm model is determined with small amount of time and calculation.

Second, the objective function is determined.

It should be understood that, an optimization objective of optimal utilization of braking energy, an optimization objective of a sub-component optimization strategy and an optimization objective of a global optimization strategy are considered in the determination of a final optimization objective of the system. All the optimization objectives may be weighted or converted into constraints, and then added together to form one optimization objective, so as to solve a multi-objective optimization problem. Alternatively, the multi-objective optimization problem is solved by using other multi-objective optimization algorithms.

1. Optimal utilization of braking energy

Braking is the most typical operating condition of a vehicle in urban rail applications. When the vehicle brakes, kinetic energy is converted into electric energy and a motor feeds electric energy back to a direct current traction network, resulting in an increase in the direct current voltage. The time the vehicle spends on braking is short, the feedback power is large. Peak power exceeds the traction power. In addition, the vehicle brakes frequently, so that optimal utilization of braking energy brings great benefits and has great significance.

The optimal utilization of braking energy includes the following different aspects from different perspectives.

In a first aspect, loss of the braking energy is minimum, that is,

$$\min P_{loss} = \sum \frac{U_{er,i}^2}{R_{er,i}} + \sum \frac{(U_{j+1}-U_j)^2}{R_j} + \sum \frac{U_{es,i}^2}{R_{es,i}}$$

$U_{er,i}$ and $R_{er,i}$ represent a port voltage and internal resistance of an (i)th bidirectional converter respectively. $U_j$ represents a voltage of a joint between a (j)th vehicle and the traction power supply system. $R_j$ represents equivalent resistance of a line between the (j)th vehicle and a (j+1)th vehicle. $U_{es,i}$ and $R_{es,i}$ represent a port voltage and internal resistance of a branch for energy storage respectively. In the equation, $\sum \dfrac{U_{er,i}^2}{R_{er,i}}$ represents loss on all branches of the bidirectional

converter. $\sum \dfrac{(U_{j+1}-U_j)^2}{R_j}$ represents loss on transmission along the line. $\sum \dfrac{U_{es,i}^2}{R_{es,i}}$ represents loss on the branch for energy storage. A minimum $P_{loss}$ indicates minimum system loss. Here, i is for summation of similar terms rather than emphasizing correspondence between the bidirectional converter and the energy storage system, and there is no correspondence between the bidirectional converter and the energy storage system.

In a second aspect, the feedback energy is maximum, that is,

$$\max P_{regen} = \left| \sum U_{er,i} I_{er,i} \right|$$

$U_{er,i}$ and $I_{er,i}$ represent a port voltage and a current of a branch of the (i)th bidirectional converter respectively. The maximum $P_{regen}$ indicates that the bidirectional converter feeds the largest amount of braking energy back to other branches.

In a third aspect, the amount of energy circulating among multiple vehicles is maximum, that is,

$$\min P_{circ} = \sum U_j I_j$$

$U_j$ and $I_j$ represent a voltage and a current of the (j)th vehicle respectively. A minimum $P_{circ}$ indicates a maximum amount of braking energy circulated among vehicles.

The voltage/current in this embodiment may be directly measured by a voltage/current sensor. For optimal utilization of braking energy, the above objective functions are solved simultaneously. Here, the objective functions are weighted and added together. An objective function for optimal utilization of the braking energy may be expressed as:

$$\min P_{reg\_opti} = \omega_1 P_{loss} + \frac{\omega_2}{P_{regen}} + \omega_3 P_{circ}$$

Weight coefficients $\omega_k$ are calculated from the following equations, respectively.

$$\begin{cases} \omega_1 = \dfrac{1}{P_{loss}^*} \\[2mm] \omega_2 = P_{regen}^* \\[2mm] \omega_3 = \dfrac{1}{P_{circ}^*} \end{cases}$$

$P^*$ represents an optimal solution of a corresponding optimization sub-objective.

2. Sub-component strategy

Optimization is performed with respect to each device objective or optimization is performed by combining different devices, that is, an optimization objective at a sub-component level.

The optimization objective at a sub-component level is related to devices and work scenarios. Here, optimization for an energy storage device only as well as optimization for an energy storage device together with a photovoltaic power generation device in a renewable power generation system is briefly described.

Optimization objective for energy storage device

The energy storage device only stores energy and supplies energy without other values. Benefits of the energy storage device are mainly from functions of the energy storage device. The optimization objective of the energy storage device mostly focuses on the maximization of benefits for energy storage.

In a first aspect, the income is acquired based on a difference between a peak electricity price and a valley electricity price.

In a case of peak-valley electricity price, the energy storage device obtains income by storing power at a low electricity price and supplying power at a high electricity price. The income from the difference between the peak electricity price and the valley electricity price is expressed as follows.

$$\max P_{p-v} = (p_H - p_L)Q - C_d$$

$P_{p-v}$ represents the income from the difference between the peak electricity price and the valley electricity price. $p_H$ and $p_L$ represent the peak electricity price and the valley electricity price respectively. Q represents the amount of power stored at the valley electricity price and supplied at the peak electricity price, and $C_d$ represents cost of the energy storage device.

In a second aspect, fee for electricity demand is managed.

Two-part tariff is currently implemented for large industrial power users in China. The power supply department charges a flat fee monthly based on transformer capacity or maximum demand for electricity. For a main substation of 110kV including two main transformers of 30MVA, a monthly fee based on the capacity is expressed as:

$$2*18\text{yuan per (kVA per month) } *30\text{MVA}=108\text{thousand yuan per month}$$

In a case that duration for a largest load in a load curve is short, the energy storage device stores electricity in a case of low power consumption and supplies electricity in a case of large power consumption, so as to reduce the large power consumption without affecting normal power consumption, thereby reducing the flat fee. The reduction in the flat fee is expressed as follows.

$$\max P_{dem} = pri_{dem}P_{dem} - C_d$$

$P_{dem}$ represents the reduction in the flat fee. $pri_{dem}$ and $P_{dem}$ represent the fee for the capacity and a reduction in the large power consumption respectively. $C_d$ represents the cost of the energy storage device.

Optimization for photovoltaic power generation device together with energy storage device

In the optimization for the photovoltaic power generation device together with the energy storage device, the energy storage device stores the electricity that is generated by the photovoltaic power generation device and not consumed by the load, so that effectively improves consumption of electricity generated by the photovoltaic power generation device, thereby increasing income from the photovoltaic power generation system. The income from the optimization for the photovoltaic power generation device together with the energy storage device is expressed as follows.

$$\max P_{pv-es} = p_H \Delta Q_{pv} - C_d$$

$P_{pv-es}$ represents the income from the optimization for the photovoltaic power generation device together with the energy storage device. $p_H$ and $\Delta Q_{pv}$ represent the peak electricity price and the amount of electricity stored by the energy storage device respectively. $C_d$ represents the cost of the energy storage device.

In the optimization for the photovoltaic power generation device together with the energy storage device, the energy storage device stores electricity in one period of time and supplies electricity in another period of time, which is inseparable from a scheduling plan of energy storage. Because of limited controllable variables of the energy storage device, only the power at which the energy storage device stores electricity and the power at which the energy storage device supplies are regulable. In addition, there is a constraint on the SOC, for example, the energy storage device may fail to fully store the electricity, generated by the photovoltaic power generation device and not consumed by the load, due to excessive high SOC before the peak of the photovoltaic power generation. Therefore, in order to achieve an optimal objective for the optimization for the photovoltaic power generation device together with the energy storage device, an algorithm for the scheduling plan of energy storage with a maximum benefit is determined based on power generation characteristics of the photovoltaic power generation device, power consumption characteristics of loads and the peak-valley electricity price. The optimization objective is expressed as follows.

$$\max P_{total\_pv\_es} = P_{p-v} + P_{dem} + P_{pv-es}$$

3. Global strategy

The global strategy refers to optimization on the entire system. The optimization objective includes minimum active power, minimum system loss, minimum highest demand for electricity by the system, and the like.

The objective function for the minimum active power is expressed as follows.

$$\min P_{ActiveP} = \sum \text{Real}(U_{er,i} I_{er,i}) + \sum \text{Real}(U_{DG,i} I_{DG,i})$$

$U_{er,i}$ and $I_{er,i}$ represent a port voltage and a current of a branch of an (i)th bidirectional converter respectively. $U_{DG,i}$ and $I_{DG,i}$ represent a port voltage and a current of an (i)th distributed power supply respectively. The distributed power supply is implemented as the renewable power generation system herein. Real represents the active power in complex power of a branch. It should be understood that $\Sigma$Real($U_{er,i}I_{er,i}$) represents active power of a branch formed by the bidirectional converter. $\Sigma$Real($U_{DG,i}I_{DG,i}$) represents active power of a branch formed by the distributed power supply. A minimum of $P_{ActiveP}$ indicates minimum active power of the entire system.

Here, i is for summation of similar terms rather than emphasizing correspondence between the bidirectional converter and the distributed power supply, and there is no correspondence between the bidirectional converter and the distributed power supply.

The objective function for the minimum system loss is expressed as follows.

$$\min P_{loss} = \sum \frac{U_{er,i}^2}{R_{er,i}} + \sum \frac{(U_{j+1} - U_j)^2}{R_j} + \sum \frac{U_{DG,i}^2}{R_{DG,i}} + \sum \frac{U_{es,i}^2}{R_{es,i}}$$

$U_{er,i}$ and $R_{er,i}$ represent a port voltage and internal resistance of the (i)th bidirectional converter respectively. $U_j$ represents a voltage of a joint between a (j)th vehicle and the traction power supply system. $R_j$ represents equivalent resistance of a line between the (j)th vehicle and a (j+1)th vehicle. $U_{DG,i}$ and $R_{DG,i}$ represent a port voltage and resistance of an (i)th distributed power supply respectively. $U_{es,i}$ and $R_{es,i}$ represent a port voltage and resistance of a branch for energy storage. $\sum \frac{U_{er,i}^2}{R_{er,i}}$ represents loss on the branch formed by the bidirectional converters. $\sum \frac{(U_{j+1}-U_j)^2}{R_j}$ represents loss on transmission. $\sum \frac{U_{DG,i}^2}{R_{DG,i}}$ represents loss on the branch formed by distributed power supplies. $\sum \frac{U_{es,i}^2}{R_{es,i}}$ represents loss on the branch for energy storage. In a case of minimum of $P_{loss}$, loss of the entire system is minimum. Here, i is for summation of similar terms rather than emphasizing correspondence among the bidirectional converter, the distributed power supply and the energy storage device, and there is no correspondence among the bidirectional converter, the distributed power supply and the energy storage device.

Objective function for minimum highest demand for electricity

According to the two-part tariff currently implemented in China, the flat fee is charged monthly based on transformer capacity or maximum demand for electricity. The ECMS may perform capacity configuration management via the energy storage system. The energy storage system stores electricity during valley periods for electricity and supplies electricity during peak periods for electricity, so as reduce the maximum demand for electricity from the power supply department. Alternatively, the maximum demand for electricity from the power supply department is reduced by lowering power of adjustable loads, shifting some loads by other power supplies or shut downing some loads with demand side response.

Therefore, the objective function of the minimum highest demand for electricity is expressed as follows.

$$\min P_{Peak} = P_{Peak0} - P_{es\_dem} - P_{load-dem}$$

$P_{Peak}$ represents the maximum demand for electricity. $P_{Peak0}$ represents maximum demand for electricity without the peak shaving and valley filling. $P_{es\_dem}$ represents the reduced amount in the maximum demand during the peak periods acquired from electricity storage. $P_{load-dem}$ represents the reduced amount in the maximum demand during the peak periods acquired by reducing electricity consumption of adjustable loads.

It should be understood that the above optimization objective functions are mainly based on power calculation. A total optimization objective function is obtained by weighting powers and then adding the weighted powers together, as expressed below.

$$\min P_{Global} = \omega_1 P_{ActiveP} + \omega_2 P_{loss} + \omega_3 P_{Peak}$$

Weight coefficients $\omega_k$ are calculated from the following equations, respectively.

$$\begin{cases} \omega_1 = \dfrac{1}{P^*_{ActiveP}} \\[2mm] \omega_2 = \dfrac{1}{P^*_{loss}} \\[2mm] \omega_3 = \dfrac{1}{P^*_{Peak}} \end{cases}$$

$P^*$ represents an optimal solution of a corresponding optimization sub-objective.

Similar to other objective functions described above, the objective function for minimum operation cost relates to fuel cost, power generation cost and the like economically, which are not listed in detail herein.

Third, variables are controlled.

The ECMS controls variables to solve the above optimization objective functions, for example, controlling a voltage and a current of the bidirectional converter controlled based on a control signal; controlling an operating state of the energy storage device such as controlling the energy storage device to store electricity, supply electricity and off line based on a regulation signal; controlling a state of the renewable power generation system based on a regulation signal, for example, controlling the photovoltaic power generation system to operate in an MPPT mode, at a constant voltage or off line; and controlling electricity consumption of the station facility based on a regulation signal.

Fourth, constraints are considered.

A conventional power supply and distribution network has the following constraints.

1. Constraints on voltage

There is an upper limit and a lower limit for a voltage of a traction grid for feedback according to national standard, and excessive high and low voltages are not allowed. The upper and lower limits are expressed as follows.

$$\begin{cases} U_{low} \leq U_{er,i} \leq U_{high} \\ U_{low} \leq U_j \leq U_{high} \end{cases}$$

$U_{low}$ and $U_{high}$ represent the lower limit and the upper limit of the voltage of the traction grid, respectively.

2. Constraints on power flowing to branches

There are also an upper limit for power allowed to flow into a branch of the bidirectional converter and an upper limit for power allowed to flow into a branch of the energy storage device. The power to flow into each branch cannot exceed the upper limit for the branch. These upper limits are expressed as follows.

$$\begin{cases} \mathrm{U}_{er,i}\mathrm{I}_{er,i} \leq P_{high,er,i} \\ \mathrm{U}_{es,i}\mathrm{I}_{es,i} \leq P_{high,es,i} \end{cases}$$

$P_{high,er,i}$ represents the upper limit for power allowed to flow into the branch of the bidirectional converter, and $P_{high,es,i}$ represents the upper limit for power allowed to flow into the branch of the energy storage device.

3. Constraints on the energy storage device

There are an upper limit and a lower limit for the state of charge of the energy storage device, which are expressed as follows.

$$SOC_{\min} \leq SOC \leq SOC_{\max}$$

A service life of the energy storage device is indicated by an upper limit of the number of cycles for storing electricity and supplying electricity of the energy storage device, and is expressed as follows.

$$ES_{circle} \leq ES_{circle\_\max}.$$

Fifth, optimal power flow calculation is performed.

In essence, the optimal power flow problem is a discrete, nonlinear, multi-objective constrained combination optimization problem, to find an appropriate practical solution based on multi-objective optimization. At present, there are many algorithms for solving the optimal power flow problem, including the quadratic programming algorithm, the linear programming algorithm, the nonlinear programming algorithm, the hybrid programming algorithm and the artificial intelligence algorithm such as the particle swarm optimization and the genetic algorithm.

The optimal power flow calculation by the ECMS is described below with reference to a network corresponding to the algorithm model in Figure 5. Configurations in Figure 5 are as follows.

For load, the vehicle in the branch $I_2$ accelerates under traction at a power of 3.77MW, and the vehicle in the branch $I_3$ brakes and feeds back a power of 5MW.

For control variables, a four-quadrant branch ER of the bidirectional converters includes a rectifier branch and an energy feedback branch, and variables controllable by the ECMS in the network include voltages $U_1$ and $U_5$ at the direct current side. According to the voltage standard of the traction power supply system currently in in force, the direct current voltage of the four-quadrant branch is set to range from 1600V to 1950V The power flow of $U_1$ and $U_5$ from 1600V to 1950V is analyzed below.

An admittance matrix is calculated based on line parameters. It is supposed that two four-quadrant branches stabilize the voltage of the direct current traction network at 1600V

(1) Voltages of nodes are initialized. All node voltages in Figure 5 each are set to 1600V initially.

(2) Powers of vehicles are set. The vehicle in the branch $I_2$ is set to operate at a power of 3.77MW. The vehicle in the branch $I_3$ is set to operate at a power of -SMW. The vehicle in the branch $I_4$ is set to operate at a power of 0.

(3) Power flow calculation is performed. For each branch, a current flowing through the branch is calculated based on the voltage of a node and the power of the vehicle in this branch. A voltage of a first node is calculated by multiplying the current by an inverse matrix of the admittance matrix through the Picard iteration. The calculated voltage serves as an initial value based on which a voltage of a next node is calculated through iteration, and so on, until a convergence condition is met.

A result converges after tens of iterations. Voltages of nodes and currents flowing through branches are expressed as follows.

$$U_n = \begin{bmatrix} 1600, 1614.6, 1746.1, 1720.2, 1600 \end{bmatrix}$$

$$I_n = \left[-57.10, -2335.0, 2863.5, 0, -471.3\right]$$

It can be seen that voltage of the four-quadrant branch is low in this case, and two four-quadrant branches operate in a feedback mode. Since there is a branch in which the vehicle consumes power between the vehicle that brakes and $ER_1$, feedback power of 91.3kW from $ER_1$ and is less than feedback power of 754kW from $ER_2$.

Optimization objective is performed. Total active power consumption and total line loss of the network under this configuration are calculated based on the line parameters and power flow.

Controllable variables are regulated. Voltages at the direct current side of the four-quadrant branch are regulated, and the power flow calculation is iterated until all voltages at the direct current side of the four-quadrant branch are involved.

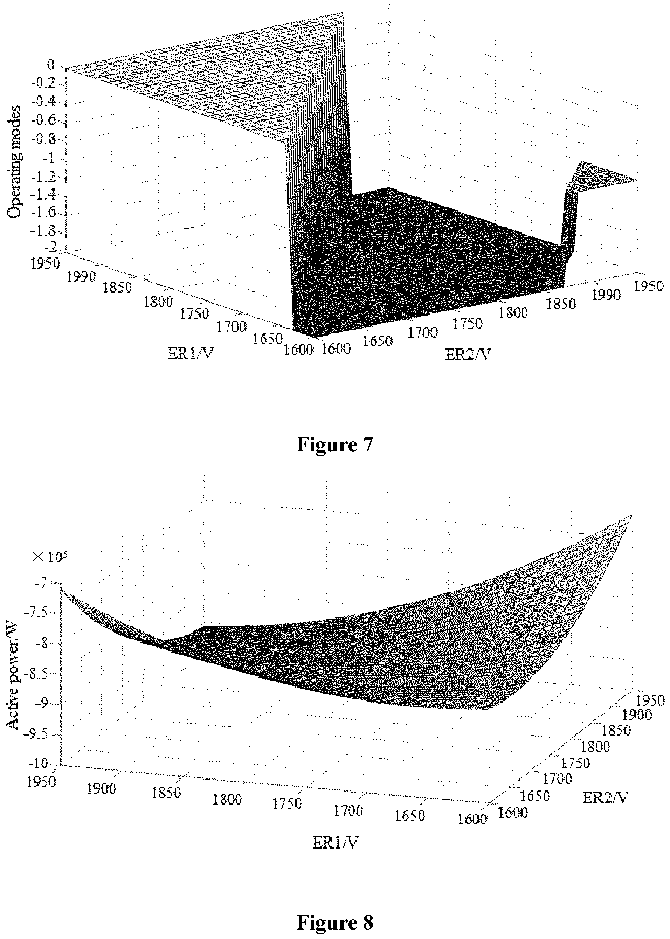

Operation modes of the two four-quadrant branches during the regulation are as shown in Figure 7. 0 represents that $ER_1$ performs rectification and $ER_2$ feeds electricity back. -1 represents that $ER_1$ feeds electricity back and $ER_2$ performs rectification. -2 represents that both of $ER_1$ and $ER_2$ feed electricity back. Since the feedback power of $ER_1$ is small, $ER_1$ performs rectification in a case that the direct current voltage of $ER_1$ is greater than 1630V. $ER_2$ may switch to rectification only when the direct current voltage of $ER_2$ is greater than 1870V

The total active power consumption of the network in this example is as shown in Figure 8. Since the vehicle that brakes feeds a power of 5MW back, the total active power is negative. In a case that direct current voltages of $ER_1$ and $ER_2$ each are 1950V, power fed by of the entire direct current network reaches a peak of 955.5kW, and the total active power is the minimum.

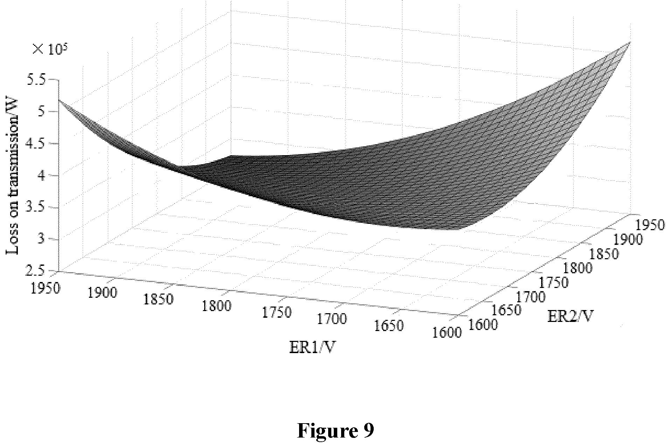

The total line loss of the network in this example is as shown in Figure 9, and the line loss varies symmetrically. In a case that the voltage of $ER_1$ is equal to the voltage of $ER_2$, the line loss is small. In a case that the voltage of $ER_1$ is not equal to the voltage of $ER_2$, the line loss is large. In a case that the voltage of $ER_1$ and the voltage of $ER_2$ each are 1950V, the line loss is minimum and is 272.7kW.

The optimal power flow calculation by the ECMS is illustrated in this example. It should be noted that in this model, the minimum active power consumption and the minimum line loss can be achieved simultaneously. However, this conclusion is not universal since only the direct current network and the controllable variables including only voltages of $ER_1$ and $ER_2$ are involved. It is necessary to improve the model for example, adding other branches (1180V/400V) and a photovoltaic energy storage model, and involving various factors such as conversion efficiency of the converter affecting energy transfer in further researches.

It should be noted that a convergent result for the power flow calculation is not available for all operating conditions. If necessary, the convergence condition is studied in detail, and other iteration algorithm for the power flow calculation with higher calculation efficiency and better convergence are considered as alternatives.

It should be understood that the calculation amount increases exponentially in a case of multiple control variables. In this case, it is clearly inappropriate to find the optimal solution by traversing all solution spaces of the controllable variables as described in the above example. In this case, a global optimal solution in the solution spaces of the controllable variable is found based on the multi-objective optimization algorithm (for example, the particle swarm optimization, or the genetic algorithm), so as to obtain an optimal power flow optimization solution.

In summary, the ECMS receives the electrical state information and the vehicle operation information, including a voltage and a current at each of an alternating current side and a direct current side of the bidirectional converter, the speed and the power of the vehicle, and even information such as impedance parameters of the alternating current network and the rail. The ECMS performs iteration to obtain a network space matrix of the whole traction power supply system, digitally reconstructing the power supply grid. Constraints such as dispatching loss, power, fluctuations in voltage, harmonics, and power factors of each substation are taken into consideration, output characteristics of the bidirectional converter are found and regulated based on the intelligent algorithm such as the IPOPT and the genetic algorithm to generate the control signal for the bidirectional converter while ensuring safe and stable operation of the traction power supply grid and the vehicle, so as to regulate parameters of the bidirectional converter such as the voltage at the direct current side, the fundamental current at the alternating current side, a power factor angle and a harmonic current, thereby optimize the power flow of the power grid, improving reliability and efficiency of the power supply grid, and reducing loss of the entire system.

The ECMS flexibly controls, based on the control signal, bidirectional converters in each substation of the whole line to perform rectification, conversation and reactive power compensation, thereby solving a problem of circulation among multiple bidirectional converters, and improving power quality of the entire power supply grid.

In addition, the ECMS prioritizes activation of bidirectional converters of multiple substations to supply traction energy when a large impact power demand is detected, and prioritizes activation of bidirectional converters of multiple substations to feed energy back, in order to reduce the peak capacity of substations and converters, and to reduce the fluctuations in the grid voltage. The ECMS calculates the power flow of the entire network in real time based on received operation data of the vehicle, the grid and the bidirectional converters to find an optimal direct current output voltage command for the bidirectional converters, so that the energy generated by braking in the traction power supply network can be flexibly distributed. Thereby, the energy generated by braking a vehicle can be fully used by a vehicle that demands tradition, thereby greatly reducing the line loss.

In the method according to this embodiment, the ECMS dynamically regulates output characteristics of multiple bidirectional converters on the power supply line, and flexibly the amount of power and a direction in which the power is outputted to or received by each bidirectional converter from the direct current power supply grid. Therefore, in a case that a distance for power supply increases due to a failure in a substation, the ECMS regulates a target value for voltage stabilization of a substation adjacent to the failed substation in the traction power supply system, to ensure electricity safety of the vehicle and avoid power limitation of the vehicle.

According to this embodiment, the existing problems of large fluctuations in voltage, poor power quality, high loss and insufficient utilization of braking energy are solved. The vehicle operation information and the grid operation information can be exchanged, providing a basis for regulating matching between supply and demand, improving operational density and controlling the vehicle to operate based on the optimization objective function. Further, the ECMS controls the bidirectional converters to output a high and stable direct current voltage, the distance for the power supply increases, the number of traction substations is reduced, and the fixed cost in power facilities is reduced. The bidirectional converter replaces the uncontrolled rectifier diode unit and energy feedback device, so that the number of devices is reduced and the floor space of the substation is reduced accordingly.

Therefore, with the structure of the traction power supply system in which the direct current power supply bus is connected to the alternating current power supply bus via the bidirectional converters, the energy of the traction power supply system is flexibly distributed by the method according to this embodiment, so that the entire power supply and distribution grid can operate greenly, controllably, safely, efficiently and intelligently.

Fourth Embodiment

Accordingly, a device for controlling a traction power supply system for rail transport is further provided according to an embodiment of the present disclosure. The device includes a processor and a memory. The processor is configured to, when executing a computer program stored in the memory, establish an algorithm model for the traction power supply system for rail transport; acquire electrical state information of the traction power supply system for rail transport; and perform an optimal power flow calculation based on the algorithm model and the electrical state information and output a control signal to the plurality of bidirectional converters.

According to the present disclosure, the direct current power supply bus is connected to the alternating current power supply bus via the bidirectional converters, so that the amount of power and a direction in which the power is outputted from the direct current power supply bus and the alternating current power supply bus can be flexibly regulated, thereby proactively avoiding potential fluctuations in the direct current voltage. In addition, conversion of voltage, feedback of energy from brake, harmonic control, and reactive power compensation are all achieved, thereby improving utilization of energy generated by railway brake and efficiency of the traction power supply. Therefore, the entire power supply and distribution grid can operate greenly, controllably, safely, efficiently and intelligently.

In some embodiments, the processor is further configured to, when executing the computer subprogram stored in the memory, acquire vehicle operation information of the rail vehicle from the ATS, where the vehicle operation information comprises an operation speed and an operation power.

In some embodiments, the processor is further configured to, when executing the computer subprogram stored in the memory, acquire a predicted position for the rail vehicle based on the vehicle operation information; and perform, based on the algorithm model, the electrical state information, the vehicle operation information and the predicted position for the rail vehicle, the optimal power flow calculation according to a principle of supplying power to the rail vehicle by a substation proximity to the rail vehicle, and outputting the control signal to the multiple bidirectional converters to control the rail vehicle to operate following a predetermined energy-saving curve.

In some embodiments, the processor is further configured to, when executing the computer subprogram stored in the memory, output a regulation signal to an energy storage device of the traction power supply system for rail transport.

In some embodiments, the processor is further configured to, when executing the computer subprogram stored in the memory, outputting a regulation signal to the multiple station facilities.

In some embodiments, the processor is further configured to, when executing the computer subprogram stored in the memory, output a regulation signal to a renewable power generation system of the traction power supply system for rail transport.

In some embodiments, the processor is further configured to, when executing the computer subprogram stored in the memory, equate each of the plurality of bidirectional converters with an equivalent internal resistor and an ideal voltage source that are connected in series; and equate the rail vehicle with a controlled current source, where a power of the controlled current source depends on vehicle operation information of the rail vehicle.

In some embodiments, the processor is further configured to, when executing the computer subprogram stored in the memory, perform a power flow calculation based on the algorithm model and the electrical state information, to determine a power flow state of the algorithm model; determine the control signal based on the power flow state and an optimization objective function; and output the control signal to the multiple bidirectional converters, to control the traction power supply system for rail transport to reach a target defined by the optimization objective function.

In some embodiments, the optimization objective function includes at least one of an objective function for minimum active power, an objective function for minimum loss, an objective function for minimum highest electricity demand, and an objective function for minimum cost.

Fifth Embodiment

A computer readable storage medium is further provided according to an embodiment of the present disclosure. The computer readable storage medium herein includes a random-access memory (RAM), a memory, a read-only memory (ROM), an electrically programmable ROM, an electrically erasable programmable ROM, a register, a hard disk, a removable hard disk, a CD-ROM or any other storage medium known in art. The computer readable storage medium stores a computer program. The computer program, when executed by a processor, implements functions of: establishing an algorithm model for the traction power supply system for rail transport; acquiring electrical state information of the traction power supply system for rail transport; and performing an optimal power flow calculation based on the algorithm model and the electrical state information and outputting a control signal to the plurality of bidirectional converters.

According to the present disclosure, the direct current power supply bus is connected to the alternating current power supply bus via the bidirectional converters, so that the amount of power and a direction in which the power is outputted from the direct current power supply bus and the alternating current power supply bus can be flexibly regulated, thereby proactively avoiding potential fluctuations in the direct current voltage. In addition, conversion of voltage, feedback of energy from brake, harmonic control, and reactive power compensation are all achieved, thereby improving utilization of energy generated by railway brake and efficiency of the traction power supply. Therefore, the entire power supply and distribution grid can operate greenly, controllably, safely, efficiently and intelligently.

In some embodiments, a computer subprogram stored in the computer readable storage medium, when executed by a processor, implements functions of: acquiring vehicle operation information of the rail vehicle from the ATS, where the vehicle operation information comprises an operation speed and an operation power.

In some embodiments, a computer subprogram stored in the computer readable storage medium, when executed by a processor, implements functions of: acquiring a predicted position for the rail vehicle based on the vehicle operation information; and performing, based on the algorithm model, the electrical state information, the vehicle operation information and the predicted position for the rail vehicle, the optimal power flow calculation according to a principle of supplying power to the rail vehicle by a substation proximity to the rail vehicle, and outputting the control signal to the plurality of bidirectional converters to control the rail vehicle to operate following a predetermined energy-saving curve.

In some embodiments, a computer subprogram stored in the computer readable storage medium, when executed by a processor, implements functions of: outputting a regulation signal to an energy storage device of the traction power supply system for rail transport.

In some embodiments, a computer subprogram stored in the computer readable storage medium, when executed by a processor, implements functions of: outputting a regulation signal to the plurality of station facilities.

In some embodiments, a computer subprogram stored in the computer readable storage medium, when executed by a processor, implements functions of: outputting a regulation signal to a renewable power generation system of the traction power supply system for rail transport.

In some embodiments, a computer subprogram stored in the computer readable storage medium, when executed by a processor, implements functions of: equating each of the plurality of bidirectional converters with an equivalent internal resistor and an ideal voltage source that are connected in series; and equating the rail vehicle with a controlled current source, where a power of the controlled current source depends on vehicle operation information of the rail vehicle.

In some embodiments, a computer subprogram stored in the computer readable storage medium, when executed by a processor, implements functions of: performing a power flow calculation based on the algorithm model and the electrical state information, to determine a power flow state of the algorithm model; determining the control signal based on the power flow state and an optimization objective function; and outputting the control signal to the plurality of bidirectional converters, to control the traction power supply system for rail transport to reach a target defined by the optimization objective function.

In some embodiments, the optimization objective function includes at least one of an objective function for minimum active power, an objective function for minimum loss, an objective function for minimum highest electricity demand, and an objective function for minimum cost.

Finally, it should be noted that those skilled in the art should understand that all or part of the steps in the above embodiments may be implemented by hardware instructed based on a program. The program may be stored in a computer readable storage unit. The storage units described in all embodiments of the present disclosure include a read-only memory, a random-access memory, a disk or the like.

In this description, terms of "include", "comprise" or any other variants are intended to be non-exclusive. Therefore, a process, method, article or device including multiple elements includes not only the listed elements but also other elements that are not enumerated, or also include the elements inherent for the process, method, article or device. Unless expressively limited otherwise, the statement " including one..." does not exclude the case that other similar elements may exist in the process, method, article or device.

The embodiments of the present disclosure are described in a progressive manner, each embodiment focuses on differences from other embodiments, and the same or similar parts between various embodiments may be referred to each other.

With the description of the embodiments disclosed above, those skilled in the art may implement or use the technical solutions of the present disclosure. Numerous modifications to the embodiments are apparent to those skilled in the art, and the general principles defined herein may be implemented in other embodiments without departing from the spirit or scope of the present disclosure. Therefore, the present disclosure should comply with the widest scope consistent with the principles and novel features disclosed herein rather than limited to the embodiments described herein.

## Claims

1. A traction power supply system for rail transport, comprising:

   a high-voltage alternating current power supply bus;
   a plurality of bidirectional converters;
   a direct current power supply bus configured to supply power to a rail vehicle; and
   a plurality of station facilities, wherein
   for each of the plurality of bidirectional converters, one end of the bidirectional converter is connected to the high-voltage alternating current power supply bus, and the other end of the bidirectional converter is connected to the direct current power supply bus; and
   the plurality of station facilities each are connected to the high-voltage alternating current power supply bus.

2. The traction power supply system for rail transport according to claim 1, further comprising:
   a renewable power generation system connected to the high-voltage alternating current power supply bus.

3. The traction power supply system for rail transport according to claim 1, further comprising:
   an energy storage device connected to the direct current power supply bus.

4. The traction power supply system for rail transport according to claim 1, wherein
   the number of the high-voltage alternating current power supply bus is more than one, power is supplied to the more than one high-voltage alternating current power supply buses by respective high-voltage alternating current power supplies, and one of the more than one high-voltage alternating current power supply buses is connected to another of the more than one high-voltage alternating current power supply buses via a bus tie breaker.

5. The traction power supply system for rail transport according to any one of claims 1 to 4, further comprising:
   an ECMS configured to output a control signal to the plurality of bidirectional converters.

6. The traction power supply system for rail transport according to claim 5, wherein
   the ECMS is configured to perform an optimal power flow calculation based on electrical state information of the plurality of bidirectional converters to determine the control signal.

7. The traction power supply system for rail transport according to claim 6, wherein
   the ECMS is configured to communicate with the plurality of bidirectional converters via an optical fiber or a 4G communication module.

8. The traction power supply system for rail transport according to claim 5, wherein
   the ECMS is connected to an ATS, and is further configured to determine the control signal based on vehicle operation information acquired from the ATS.

9. A method for controlling a traction power supply system for rail transport, wherein the method is applied to the traction power supply system for rail transport according to any one of claims 1 to 8, and the method comprises:

establishing an algorithm model for the traction power supply system for rail transport;
acquiring electrical state information of the traction power supply system for rail transport; and
performing an optimal power flow calculation based on the algorithm model and the electrical state information and outputting a control signal to the plurality of bidirectional converters.

10. The method according to claim 9, further comprising:

before the performing an optimal power flow calculation based on the algorithm model and the electrical state information and outputting a control signal to the plurality of bidirectional converters,
acquiring vehicle operation information of the rail vehicle from the ATS, wherein the vehicle operation information comprises an operation speed and an operation power, and
wherein the performing an optimal power flow calculation based on the algorithm model and the electrical state information and outputting a control signal to the plurality of bidirectional converters comprises:

acquiring a predicted position for the rail vehicle based on the vehicle operation information; and
performing, based on the algorithm model, the electrical state information, the vehicle operation information and the predicted position for the rail vehicle, the optimal power flow calculation according to a principle of supplying power to the rail vehicle by a substation proximity to the rail vehicle, and outputting the control signal to the plurality of bidirectional converters to control the rail vehicle to operate following a predetermined energy-saving curve.

11. The method according to claim 9, wherein the performing an optimal power flow calculation based on the algorithm model and the electrical state information and outputting a control signal to the plurality of bidirectional converters further comprises:
outputting a regulation signal to an energy storage device of the traction power supply system for rail transport.

12. The method according to claim 9, wherein the performing an optimal power flow calculation based on the algorithm model and the electrical state information and outputting a control signal to the plurality of bidirectional converters further comprises:
outputting a regulation signal to the plurality of station facilities.

13. The method according to claim 9, wherein the performing an optimal power flow calculation based on the algorithm model and the electrical state information and outputting a control signal to the plurality of bidirectional converters further comprises:
outputting a regulation signal to a renewable power generation system of the traction power supply system for rail transport.

14. The method according to any one of claims 9 to 13, wherein the establishing an algorithm model for the traction power supply system for rail transport comprises:

equating each of the plurality of bidirectional converters with an equivalent internal resistor and an ideal voltage source that are connected in series; and
equating the rail vehicle with a controlled current source, wherein a power of the controlled current source depends on vehicle operation information of the rail vehicle.

15. The method according to claim 14, wherein the performing an optimal power flow calculation based on the algorithm model and the electrical state information and outputting a control signal to the plurality of bidirectional converters comprises:

performing a power flow calculation based on the algorithm model and the electrical state information, to determine a power flow state of the algorithm model;
determining the control signal based on the power flow state and an optimization objective function; and
outputting the control signal to the plurality of bidirectional converters, to control the traction power supply system for rail transport to reach a target defined by the optimization objective function.

16. The method according to claim 15, wherein the optimization objective function comprises:
at least one of an objective function for minimum active power, an objective function for minimum loss, an objective function for minimum highest electricity demand, and an objective function for minimum cost.

**17.** A device for controlling a traction power supply system for rail transport, comprising:

a memory configured to store a computer program; and
a processor configured to execute the computer program to perform the method for controlling a traction power supply system for rail transport according to any one of claims 9 to 16.

**18.** A computer readable storage medium storing a computer program, wherein the computer program, when executed by a processor, implements the method for controlling a traction power supply system for rail transport according to any one of claims 9 to 16.

**Figure 1**

S01

Establish an algorithm model for a traction power supply system for rail transport

S02

Acquire electrical state information of the traction power supply system for rail transport

S03

Perform an optimal power flow calculation based on the algorithm model and the electrical state information, and outputting a control signal to multiple bidirectional converters

**Figure 2**

V

―――― Prior art

― ― Embodiment of the present application

Speed curve of vehicle        t

**Figure 3**

S11

Equate a bidirectional converter with an equivalent internal resistor and an ideal voltage source that are connected in series

S12

Equate a rail vehicle with a controlled current source, where power of the controlled current source depends on vehicle operation information of the vehicle

S13

Perform a power flow calculation based on an algorithm model And electrical state information, to determine a power flow state of the algorithm model

S13

S14

Determine a control signal based on the power flow state and a optimization objective function

S15

Output the control signal to multiple bidirectional converters, to control the traction power supply system for rail transport to reach a target defined by the optimization objective function

**Figure 4**

**Figure 5**

**Figure 6**

**Figure 7**

**Figure 8**

**Figure 9**

## INTERNATIONAL SEARCH REPORT

| International application No. |
| --- |
| **PCT/CN2020/124649** |

**A. CLASSIFICATION OF SUBJECT MATTER**

H02J 3/06(2006.01)i; H02J 3/28(2006.01)i

According to International Patent Classification (IPC) or to both national classification and IPC

**B. FIELDS SEARCHED**

Minimum documentation searched (classification system followed by classification symbols)

H02J

Documentation searched other than minimum documentation to the extent that such documents are included in the fields searched

Electronic data base consulted during the international search (name of data base and, where practicable, search terms used)

CNABS; CNTXT; CNKI; DWPI; SIPOABS: 轨道, 机车, 动车, 列车, 牵引, 供电, 双向变流, 潮流, 控制, ECMS, ATS, 潮流计算, 优化; track, locomotive, high speed train, train, tractive, power supply, bidirectional converter, power flow, control, ECMS, ATS, optimize

**C. DOCUMENTS CONSIDERED TO BE RELEVANT**

| Category* | Citation of document, with indication, where appropriate, of the relevant passages | Relevant to claim No. |
| --- | --- | --- |
| Y | CN 109698496 A (ZHUZHOU CRRC TIMES ELECTRIC CO., LTD.) 30 April 2019 (2019-04-30) <br> description, paragraphs 22-27, figures 1-5 | 1-4 |
| Y | CN 109624792 A (CRRC CHANGCHUN RAILWAY VEHICLES CO., LTD.) 16 April 2019 (2019-04-16) <br> description, paragraphs 31-62, figures 1-7 | 1-4 |
| A | CN 111347942 A (XI'AN XJ POWER ELECTRONICS TECHNOLOGY CO., LTD. et al.) 30 June 2020 (2020-06-30) <br> entire document | 1-18 |
| A | CN 103149498 A (SOUTHWEST JIAOTONG UNIVERSITY) 12 June 2013 (2013-06-12) <br> entire document | 1-18 |
| A | US 5280418 A (GRIFFIN ANTHONY J) 18 January 1994 (1994-01-18) <br> entire document | 1-18 |

☐ Further documents are listed in the continuation of Box C.    ☑ See patent family annex.

| | | |
| --- | --- | --- |
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
| --- | --- |
| **21 July 2021** | **30 July 2021** |

| Name and mailing address of the ISA/CN | Authorized officer |
| --- | --- |
| **China National Intellectual Property Administration (ISA/CN)** <br> **No. 6, Xitucheng Road, Jimenqiao, Haidian District, Beijing 100088** <br> **China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2020/124649**

| Patent document cited in search report | | | Publication date (day/month/year) | Patent family member(s) | | | Publication date (day/month/year) |
|---|---|---|---|---|---|---|---|
| CN | 109698496 | A | 30 April 2019 | None | | | |
| CN | 109624792 | A | 16 April 2019 | None | | | |
| CN | 111347942 | A | 30 June 2020 | None | | | |
| CN | 103149498 | A | 12 June 2013 | CN | 103149498 | B | 05 August 2015 |
| US | 5280418 | A | 18 January 1994 | None | | | |

Form PCT/ISA/210 (patent family annex) (January 2015)

**EP 4 207 529 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202011147149